Europäisches Patentamt

European Patent Office

Office européen des brevets

(11) Veröffentlichungsnummer: **0 475 180 A1**

# EUROPÄISCHE PATENTANMELDUNG

(21) Anmeldenummer: **91114268.5**

(51) Int. Cl.5: **H04L 12/56**

(22) Anmeldetag: **26.08.91**

(30) Priorität: **04.09.90 DE 4028014**

(43) Veröffentlichungstag der Anmeldung:
**18.03.92 Patentblatt 92/12**

(84) Benannte Vertragsstaaten:
**BE DE GB IT**

(71) Anmelder: **SIEMENS AKTIENGESELLSCHAFT**
**Wittelsbacherplatz 2**
**W-8000 München 2(DE)**

(72) Erfinder: **Dasch, Bernd, Dr. Ing.**
**Aubingerstrasse 8**
**W-8082 Lochham(DE)**
Erfinder: **Naessl, Robert, Dipl.-Ing.**
**Am Hohen Weg 29**
**W-8081 Kottgeisering(DE)**

(54) Verfahren zum Übertragen von Nachrichtenblöcken zwischen bei bestehenden Verbindungen einander zugeordneten Übertragungsleitungen einer Fernmeldevermittlungsanlage.

(57) In der Fernmeldevermittlungsanlage (DVA) sind mit den Übertragungsleitungen verbundene Leitungsanschlußeinrichtungen (TU1 bis TUn) über wenigstens ein internes Leitungssystem (BUS) an eine Mehrzahl von Vermittlungsrechnern (SU1 bis SUm) angeschlossen. Im Zuge bestehender Verbindungen ist für die Übertragung von Nachrichtenblöcken zwischen den Leitungsanschlußeinrichtungen und den Vermittlungsrechnern eine Flußsteuerung vorgesehen. Diese bewirkt, daß bei einer momentanen Überlast eines der Vermittlungsrechner bzw. einer der abgehenden Übertragungsleitungen lediglich die für diesen Vermittlungsrechner bzw. die für diese abgehende Übertragungsleitung bestimmten Nachrichtenblöcke für eine Übertragung vorübergehend zurückgestellt werden.

FIG1

EP 0 475 180 A1

Die Erfindung betrifft ein Verfahren gemäß Oberbegriff des Patentanspruches 1 bzw. des Patentanspruches 3.

Es ist bereits eine modular aufgebaute Fernmeldevermittlungsanlage bekannt (europäische Patentanmeldung 0 160 300), bei welcher mit Übertragungsleitungen verbundene Leitungsanschlußeinrichtungen gemeinsam mit einer Mehrzahl von Vermittlungsrechnern an ein Ringleitungssystem angeschlossen sind. In den Aufbau einer Verbindung sind dabei zunächst in der Regel zwei Leitungsanschlußeinrichtungen, nämlich die mit der ankommenden Übertragungsleitung und die mit der abgehenden Übertragungsleitung verbundene Leitungsanschlußeinrichtung, sowie zwei der genannten Vermittlungsrechner einbezogen. Nach dem Verbindungsaufbau erfolgt dann die Übertragung von Nachrichtenblöcken zwischen den in die betreffende Verbindung einbezogenen Übertragungsleitungen lediglich noch unter der Steuerung eines der beim Verbindungsaufbau beteiligten Vermittlungsrechner. Der verbleibende zweite Vermittlungsrechner dient als Reserveeinheit, um beim Ausfall des erstgenannten Vermittlungsrechners dessen Aufgabe zu übernehmen. Weitergehende Angaben bezüglich der Steuerung der Übertragung von Nachrichtenblöcken bei bestehenden Verbindungen innerhalb der Fernmeldevermittlungsanlage sind bei dem bekannten Verfahren nicht offenbart.

Es ist nun Aufgabe der vorliegenden Erfindung, einen Weg zu zeigen, wie bei einem Verfahren gemäß Oberbegriff des Patentanspruches 1 zur Abwehr von Überlastsituationen innerhalb der Fernmeldevermittlungsanlage eine Flußsteuerung bei der Übertragung von Nachrichtenblöcken durchgeführt werden kann.

Gelöst wird diese Aufgabe durch die in den Patentansprüchen 1 und 3 angegebenen Verfahrensmerkmale. Die Erfindung bringt den Vorteil mit sich, daß die für die Abwehr von Überlastsituationen in den einzelnen Vermittlungsrechnern bzw. Leitungsanschlußeinrichtungen vorgesehenen Flußsteuermaßnahmen lediglich lokal wirken, d. h. daß bei Auftreten einer momentanen Überlast in einem der Vermittlungsrechner lediglich die von diesem gesteuerten Verbindungen oder bei Auftreten einer momentanen Überlast im Zuge der Weiterleitung von Nachrichtenblöcken über eine der Leitungsanschlußeinrichtungen bzw. eine der Übertragungsleitungen lediglich die über diese verlaufenden Verbindungen in eine Flußsteuerung einbezogen sind. Die Übertragung von Nachrichtenblöcken im Zuge der übrigen Verbindungen erfolgt dagegen ungehindert weiter. Ein weiterer Vorteil der Erfindung besteht darin, daß lediglich bei Auftreten von Überlastsituationen für eine entsprechende Flußsteuerung temporär Betriebsmittel in Form einer oder mehrerer Rückstell-Warteschlangen benötigt werden.

den.

Vorteilhafte Ausgestaltungen der Erfindung ergeben sich aus den Patentansprüchen 2 und 4. Der Vorteil dieser Ausgestaltungen besteht in dem relativ geringen Steuerungsaufwand für die Übertragung von der Flußsteuerung dienenden Signalen zwischen den Leitungsanschlußeinrichtungen und den Vermittlungsrechnern.

Im folgenden wird nun die vorliegende Erfindung anhand von Zeichnungen beispielsweise näher erläutert.

FIG 1      zeigt in Blockschaltbild einer modular aufgebauten Fernmeldevermittlungsanlage, bei der die Erfindung angewandt ist,

FIG 2      veranschaulicht in einem Blockdiagramm die Vorgänge bei der Übertragung von Nachrichtensignalen im Zuge bestehender Verbindungen und

FIG 3 und 4      veranschaulichen jeweils in einem Prinzipschaltbild die bei einer Flußsteuerung ablaufenden Steuerungsvorgänge.

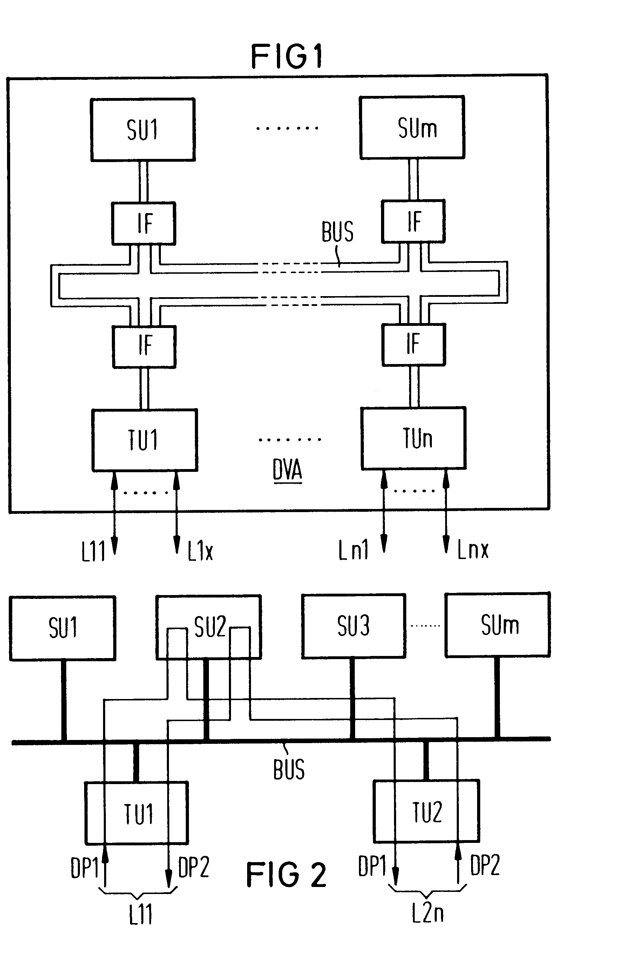

In FIG 1 ist ein Blockschaltbild einer modular aufgebauten Fernmeldevermittlungsanlage DVA dargestellt, die beispielsweise eine Datenvermittlungsanlage sein möge. Diese Datenvermittlungsanlage weist eine Mehrzahl von Leitungsanschlußeinrichtungen TU1 bis TUn auf, mit denen jeweils eine Vielzahl von Übertragungsleitungen L11,...,L1x bzw. Ln1,...,Lnx verbunden ist. Diese Übertragungsleitungen mögen beispielsweise bidirektional betrieben sein.

Zu den in FIG 1 dargestellten Leitungsanschlußeinrichtungen gehört jeweils noch eine gesonderte Schnittstelleneinrichtung IF. Über diese Schnittstelleneinrichtungen liegen die Leitungsanschlußeinrichtungen in einem Ringleitungssystem BUS, welches insbesondere nur in einer Übertragungsrichtung Signale zu übertragen gestattet und welches beispielsweise aus einer Mehrzahl von Einzelleitungen gebildet sein möge, über die Signale parallel übertragen werden. In diesem Ringleitungssystem liegen außer den gerade genannten Schnittstelleneinrichtungen weitere Schnittstelleneinrichtungen IF, die zu Vermittlungsrechnern SU1 bis SUm gehören. Die Leitungsanschlußeinrichtungen und Vermittlungsrechner stellen dabei jeweils eine Mikroprozessoranordnung dar.

Wie aus der eingangs zitierten europäischen Patentanmeldung 0 160 300 hervorgeht, kann für den Betrieb der in FIG 1 dargestellten Datenvermittlungsanlage so vorgegangen sein, daß jeder Leitungsanschlußeinrichtung TU1 bis TUn einer der Vermittlungsrechner SU1 bis SUm zugeordnet ist. Dazu sind sowohl in den einzelnen Leitungsanschlußeinrichtungen als auch in den einzelnen Vermittlungsrechnern Speicher vorhanden, in denen die betreffenden Zuordnungen festgehalten sind. So kann in dem Speicher der Leitungsanschlußeinrichtung TU1 beispielsweise die Adresse des Vermittlungsrechners SU1 gespeichert sein. In dem Speicher des Vermittlungsrechners SU1 kann bezüglich der mit der Leitungsanschlußeinrichtung TU1 verbundenen Übertragungsleitungen L11 bis L1x die Adresse der Leitungsanschlußeinrichtung TU1 gespeichert sein. In den Speichern der Vermittlungsrechner SU1 bis SUm sind außerdem Informationen darüber gespeichert, welcher Vermittlungsrechner den jeweils übrigen Übertragungsleitungen bzw. Leitungsanschlußeinrichtungen zugeordnet ist. Dies bedeutet, daß im Grunde genommen jeder der Vermittlungsrechner eine der LeitungsanschlußeinrichtungenTU1 bis TUn bedient und im übrigen Informationen über entsprechende Zuordnungen bezüglich jeder der übrigen Vermittlungsrechner enthält. Darüber hinaus kann jedem der Vermittlungsrechner einer der übrigen Vermittlungsrechner als Reserveeinheit zugeordnet sein, um bei Ausfall des erstgenannten Vermittlungsrechners dessen Aufgabe mitzuübernehmen.

In der genannten europäischen Patentanmeldung ist weiterhin ausgeführt, daß in den Aufbau einer Verbindung, die beispielsweise eine virtuelle Verbindung sein möge, im Regelfalle zwei Leitungsanschlußeinrichtungen, nämlich die mit der ankommenden Übertragungsleitung verbundene Leitungsanschlußeinrichtung und die mit der abgehenden Übertragungsleitung verbundene Leitunganschlußeinrichtung, sowie zwei diesen zugeordnete Vermittlungsrechner einbezogen sind. Der Aufbau einer solchen virtuellen Verbindung möge dabei beispielsweise entsprechend der CCITT-Empfehlung X.25 bzw. X.75 erfolgen, je nachdem, ob es sich bei den Übertragungsleitungen um mit Teilnehmereinrichtungen verbundene Übertragungsleitungen oder um Verbindungsleitungen handelt, über welche die in FIG 1 dargestellte Datenvermittlungsanlage mit weiteren Datenvermittlungsanlagen in Verbindung steht. Auf die beim Aufbau von Verbindungen in den einzelnen Leitungsanschlußeinrichtungen und Vermittlungsrechnern ablaufenden Steuerungsvorgänge wird hier nicht näher eingegangen, da derartige Steuerungsvorgänge nicht Gegenstand vorliegender Erfindung sind.

Nach dem Aufbau einer virtuellen Verbindung erfolgt in der eigentlichen Übertragungsphase die Übertragung von Nachrichtensignalen blockweise bzw. Datenpaketweise lediglich noch unter der Steuerung eines der zuvor in den Verbindungsaufbau einbezogenen Vermittlungsrechner. Dieser möge beispielsweise derjenige Vermittlungsrechner sein, welcher der mit der ankommenden Übertragungsleitung verbundenen Leitungsanschlußeinrichtung zugeordnet ist. Im übrigen sei hier darauf hingewiesen, daß unter Nachrichtensignalen allgemein Textsignale, Bild- oder Sprachsignale in digitaler Form oder sonstige digitale Signale zu verstehen sind.

In FIG 2 ist die Übertragung von Nachrichtenblöcken (Datenpaketen) im Zuge bestehender Verbindungen am Beispiel der Übertragung von Nachrichtenblöcken zwischen zwei Übertragungsleitungen dargestellt. Bei diesen beiden Übertragungsleitungen möge es sich einerseits um die mit der Leitungsanschlußeinrichtung TU1 verbundene Übertragungsleitung L11 und andererseits um die mit der Leitungsanschlußeinrichtung TU2 verbundene Übertragungsleitung L2n handeln. Nach FIG 2 werden von der Leitungsanschlußeinrichtung TU1 her über die Übertragungsleitung L11 aufgenommene Nachrichtenblöcke (Datenpakete) DP1 über das Ringleitungssystem BUS zunächst dem Vermittlungsrechner SU2 zugeführt. Dieser Vermittlungsrechner überträgt dann nach Maßgabe ihm zur Verfügung stehender Informationen die ihm gerade zugeführten Nachrichtenblöcke zu der in die virtuelle Verbindung einbezogenen Leitungsanschlußeinrichtung TU2 hin, die ihrerseits diese Nachrichtenblöcke an die Übertragungsleitung L2n weiterleitet. In entsprechender Weise werden unter der Annahme, daß zwischen den beiden genannten Übertragungsleitungen eine bidirektionale virtuelle Verbindung besteht, von der Übertragungsleitung L2n aufgenommene Nachrichtenblöcke DP2 von der Leitungsanschlußeinrichtung TU2 her über das Ringleitungssystem BUS zunächst zu dem Vermittlungsrechner SU2 und von dort aus über das Ringleitungssystem und die Leitungsanschlußeinrichtung TU1 zu der Übertragungsleitung L11 hin übertragen.

Für die genannte Übertragung von Nachrichtenblöcken über das Ringleitungssystem BUS zwischen den Leitungsanschlußeinrichtungen und dem zugeordneten Vermittlungsrechner ist ein Ringprotokoll festgelegt. Nach diesem werden die auf den Übertragungsleitungen L11 und L2n auftretenden Nachrichtenblöcke beispielsweise jeweils in einen festgelegten, im folgenden auch als interner Nachrichtenblock bezeichneten Rahmen eingefügt, in welchem unter anderen eine die als Empfänger ausgewählte Einheit, also einer der Vermittlungsrechner SU1 bis SUm bzw. eine der Leitungsanschlußeinrichtungen TU1 bis TUn, bezeichnende Empfangsadresse sowie eine die den jeweiligen Nachrichtenblock abgebende Einheit als Sender bezeichnende Sendeadresse enthalten sind. Ein solcher, über das Ringleitungssystem übertragener interner Nachrichtenblock wird von der durch die Empfangsadresse bezeichneten Einrichtung (Vermittlungsrechner bzw. Leitungsanschlußeinrichtung) übernommen und durch eine von dieser abgegebene Ringquittung quittiert. Diese Ringquittung wird dabei anstelle des zuvor übernommenen internen Nachrichtenblockes über das Ringleitungssystem zu dem Sender hin übertragen. Die Ringquittung, die Angaben bezüglich eines erfolgreichen bzw. nichterfolgreichen Empfangsvorganges enthält, kann beispielsweise bereits als vorbereitete Ringquittung an einen internen Nachrichtenblock angefügt sein. Je nach dem Empfangsvorgang wird dann diese vorbereitete Ringquittung in modifizierter Form zu der durch die in dem gerade empfangenen internen Nachrichtenblock enthaltene Sendeadresse bezeichneten Einrichtung zurückübertragen.

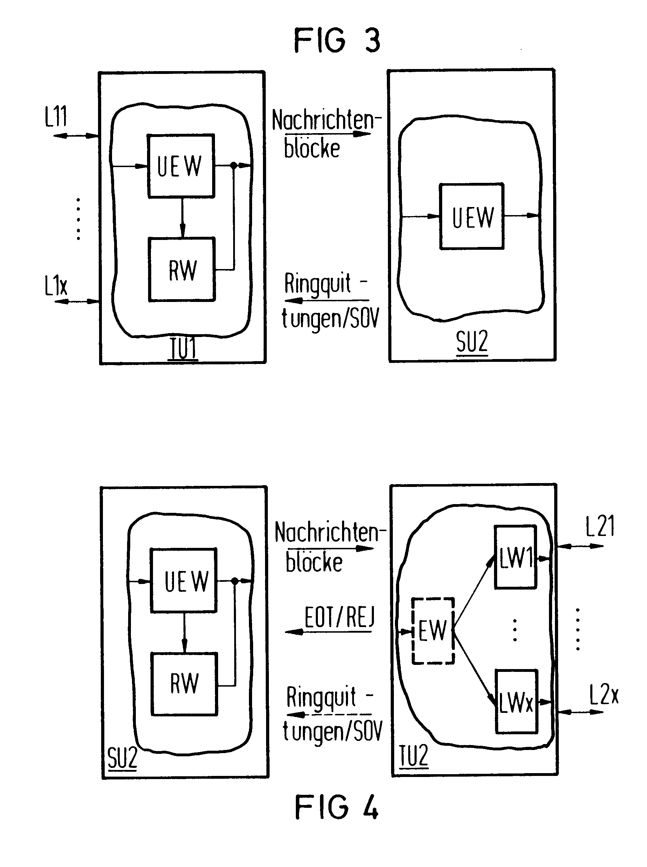

Anhand der Figuren 3 und 4 wird nun auf die Steuerungsvorgänge in den Leitungsanschlußeinrichtungen TU1 bis TUn und den Vermittlungsrechnern SU1 bis SUm bei der Übertragung von internen Nachrichtenblöcken näher eingegangen. In FIG 3 ist zunächst anhand der Leitungsanschlußeinrichtung TU1 und des Vermittlungsrechners SU2 der Fall dargestellt, daß von einer Leitungsanschlußeinrichtung interne Nachrichtenblöcke an einen der Vermittlungsrechner weiterzuleiten sind. Die den auf den Übertragungsleitungen der Leitungsanschlußeinrichtung TU1 auftretenden Nachrichtenblöcken entsprechenden interne Nachrichtenblöcke werden nacheinander in eine Übertragungswarteschlange UEW eingefügt. Kopien dieser internen Nachrichtenblöcke werden anschließend in der Reihenfolge des Einfügens der internen Nachrichtenblöcke zu den jeweils in Frage kommenden Vermittlungsrechnern hin übertragen. und zwar mit einer offenen Fenstergröße W = ∞ . Bei dem hier angenommenen Beispiel erfolgt also eine Übertragung zu dem Vermittlungsrechner SU2 hin. Dieser Vermittlungsrechner quittiert die ihm zugeführten internen Nachrichtenblöcke jeweils durch eine zuvor erwähnte Ringquittung. Je nachdem, ob der Empfangsvorgang fehlerfrei erfolgte oder ein Übertragungsfehler vorliegt, handelt es sich bei dieser Ringquittung um eine positive oder eine negative Ringquittung. Bei einem fehlerfreien Empfang, d.h. bei Abgabe einer positiven Ringquittung, wird der jeweilige empfangene interne Nachrichtenblock in eine in dem betreffenden Vermittlungsrechner geführte Übertragungswarteschlange UEW eingefügt. Bei Vorliegen eines Übertragungsfehlers wird dagegen der gerade empfangene interne Nachrichtenblock zurückgewiesen. Eine positive Ringquittung bewirkt in der jeweiligen Leitungsanschlußeinrichtung, daß derjenige interne Nachrichtenblock, von dem zuvor eine Kopie übertragen worden ist, nunmehr aus der Übertragungswarteschlange ausgekettet wird. Damit ist der Übertragungsvorgang für den jeiligen internen Nachrichtenblock abgeschlossen. Der Empfang einer negativen Ringquittung führt dagegen zu einer wiederholten Übertragung des jeweiligen internen Nachrichtenblockes.

Erreicht die in dem Vermittlungsrechner SU2 geführte Übertragungswarteschlange UEW einen festgelegten Füllgrad, so wird der nächste empfangene interne Nachrichtenblock durch eine speziell festgelegte negative Ringquittung SOV quittiert, durch die eine momentane Überlast angezeigt wird. Auf den Empfang einer solchen Ringquittung SOV reagiert die Leitungsanschlußeinrichtung TU1 mit einer Unterbrechung der Übertragung von internen Nachrichtenblöcken zu dem Vermittlungsrechner SU2 hin. Aufgrund dieser Unterbrechung wird in der Leitungsanschlußeinrichtung TU1 temporär eine Rückstell-Warteschlange RW eingerichtet, in welche der durch die Ringquittung SOV zurückgewiesene interne Nachrichtenblock sowie diesem nachfolgende, ebenfalls zu dem Vermittlungsrechner SU2 hin zu übertragende interne Nachrichtenblöcke eingefügt werden.

Nach einer festgelegten Zeitspanne, die beispielsweise im Millisekunden- bis Sekundenbereich liegt, wird dann von der Leitungsanschlußeinrichtung TU1 her erneut versucht, interne Nachrichtenblöcke zu dem Vermittlungsrechner SU2 hin zu übertragen. Ist eine solche Übertragung möglich, so werden zunächst die in die Rückstell-Warteschlange RW eingefügten internen Nachrichtenblöcke berücksichtigt, um die Reihenfolge der zu diesem Vermittungsrechner hin zu übertragenden internen Nachrichtenblöcke beizubehalten. Die aus dieser Rückstell-Warteschlange heraus übertragenen internen Nachrichtenblöcke werden dabei in der zuvor erläuterten Weise quittiert und gegebenenfalls aus dieser Rückstell-Warteschlange ausgekettet.

Die gerade anhand der Leitungsanschlußeinrichtung TU1 erläuterten Übertragungsvorgänge wiederholen sich auch in den übrigen Leitungsanschlußeinrichtungen, so daß in jeder Leitungsanschlußeinrichtung, von welcher her interne Nachrichtenblöcke zu dem Vermittlungsrechner SU2 hin zu übertragen sind, gegebenenfalls bei einer momentanen Überlast für den Vermittlungsrechner SU2 temporär eine Rückstell-Warteschlange eingerichtet wird. Schließlich wiederholen sich die in dem Vermittlungsrechner SU2 ablaufenden Steuerungsvorgänge auch in den übrigen Vermittlungsrechnern. Daraus resultiert, daß allgemein bei Auftreten einer momentanen Überlast in einem der Vermittlungsrechner SU1 bis SUm in denjenigen Leitungsanschlußeinrichtungen TU1 bis TUn, von denen aus interne Nachrichtenblöcke zu dem jeweiligen Vermittlungsrechner hin zu übertragen sind, jeweils temporär eine Rückstell-Warteschlange RW für den jeweiligen Vermittlungsrechner eingerichtet wird.

In FIG 4 ist anhand des Vermittlungsrechners SU2 und der LeitungsanschlußeinrichtungTU2 der Fall dargestellt, daß in die Übertragungswartungsschlange UEW eines Vermittlungsrechners zuvor eingefügte interne Nachrichtenblöcke zu einer oder mehreren Leitungsanschlußeinrichtungen hin zu übertragen sind. Auch eine solche Übertragung erfolgt zunächst mit einer offenen Fenstergröße W = ∞ und einer Quittierung in der oben angegebenen Weise.

Innerhalb der jeweiligen Leitungsanschlußeinrichtung, hier der Leitungsanschlußeinrichtung TU2, werden die einzelnen empfangenen internen Nachrichtenblöcke dann in Leitungswarteschlangen LW1 bis LWx eingefügt, die den einzelnen, mit der jeweiligen Leitungsanschlußeinrichtung verbundenen Übertragungsleitungen individuell zugeordnet sind. Die Aufnahme eines internen Nachrichtenblockes in eine der Leitungswarteschlangen wird dabei dem Vermittlungsrechner SU2 durch einen gesondert übertragenen Signalisierungsblock EOT angezeigt. Auf den Empfang eines solchen Signalisierungsblockes hin kettet dann dieser Vermittlungsrechner den jeweiligen internen Nachrichtenblock aus der Übertragungswarteschlange aus. Wird nun in einer der Leitungswarteschlangen LW bis LWx ein festgelegter erster Füllgrad erreicht, so wird auf den nächsten von dem Vermittlungsrechner SU2 her übertragenen, in dieselbe Leitungswarteschlange einzufügenden internen Nachrichtenblock hin von der Leitungsanschlußeinrichtung TU2 ein Signalisierungsblock EOT mit einer speziellen Codierung abgegeben. Ein solcher Signalsisierungsblock bewirkt in dem Vermittlungsrechner SU2, daß die in die betreffende Leitungswarteschlange einzufügenden internen Nachrichtenblöcke nunmehr lediglich noch mit einer Fenstergröße W = 1 übertragen werden. Mit anderen Worten, eine Übertragung eines internen Nachrichtenblockes erfolgt erst nachdem der zuvor abgegebene interne Nachrichtenblock durch einen Signalisierungsblock bestätigt worden ist. Die Fenstergröße W = 1 wird dabei beibehalten, bis zumindest der festgelegte erste Füllgrad der in Frage kommenden Leitungswarteschlange wieder unterschritten ist. Auf diese Weise wird zunächst versucht, die Anzahl der in dieser Leitungswarteschlange aufgesammelten internen Nachrichtenblöcke abzubauen, d. h. diesen internen Nachrichtenblöcken entsprechende Nachrichtenblöcke über die in Frage kommende Übertragungsleitung weiterzuleiten.

Tritt nun der Fall ein, daß trotz der Übertragung von internen Nachrichtenblöcken mit einer Fenstergröße W = 1 der Füllgrad einer Leitungswarteschlange (LW1 bis LWx) einen festgelegten, oberhalb des ersten Füllgrades liegenden zweiten Füllgrad erreicht, so wird auf den Empfang eines in diese Leitungswarteschlange einzufügenden internen Nachrichtenblockes hin von der Leitungsanschlußeinrichtung TU2 ein Signalisierungsblock REJ abgegeben, durch welchen eine momentane Überlast für die in Frage kommende Übertragungsleitung angezeigt wird. Auf den Empfang eines Signalisierungsblockes REJ reagiert der Vermittlungsrechner SU2 mit einer Unterbrechung der Übertragung von für die jeweilige Übertragungsleitung bestimmten internen Nachrichtenblöcken. Auf diese Unterbrechung hin wird in diesem Vermittlungsrechner temporär eine Rückstell-Warteschlange RW eingerichtet, in welche der durch den Signalisierungsblock REJ zurückgewiese interne Nachrichtenblock sowie diesem nachfolgende, ebenfalls für die in Frage kommende Übertragungsleitung bestimmte interne Nachrichtenblöcke eingefügt werden. Nach einer gegebenenfalls von der zuvor erwähnten festgelegten Zeitspanne abweichenden Zeitspanne wird dann von dem Vermittlungsrechner SU2 her erneut versucht, für die momentan überlastete Übertragungsleitung bestimmte interne Nachrichtenblöcke zu der Leitungsanschlußeinrichtung TU2 hin zu übertragen. Ist dies möglich, so werden zunächst die in die Rückstell-Warteschlange RW eingefügten internen Nachrichtenblöcke berücksichtigt, um die Reihenfolge der für die in Frage kommende Übertragungsleitung bestimmten Nachrichtenblöcke beizubehalten. Die in diese Rückstell-Warteschlange zunächst eingefügten internen Nachrichtenblöcke werden dabei ebenfalls wieder durch einen Signalisierungsblock EOT quittiert und gegebenenfalls aus dieser Rückstell-Warteschlange ausgekettet.

Die gerade anhand des Vermittlungsrechner SU2 erläuterten Steuerungsvorgänge wiederholen sich auch in den übrigen Vermittlungsrechnern, so daß jeder Vermittlungsrechner SU1 bis SUm, von welchem her für eine bestimmte Übertragungsleitung der Leitungsanschlußeinrichtung TU2 vorgesehene interne Nachrichtenblöcke abzugeben sind, gegebenenfalls in der zuvor angegebenen Weise für diese internen Nachrichtenblöcke eine Fenstergröße von W = 1 berücksichtigt bzw. diese internen Nachrichtenblöcke in eine für die in Frage kommende Übertragungsleitung individuell eingerichtete Rückstell-Warteschlange einfügt. Schließlich wiederholen sich die zuvor erläuterten, in der Leitungsanschlußeinrichtung TU2 ablaufenden Steuerungsvorgänge auch in den übrigen Leitungsanschlußeinrichtungen. Daraus folgt, daß allgemein bei Auftreten einer momentanen Überlast in einer in den Leitungsanschlußeinrichtungen TU1 bis TUn geführten Leitungswarteschlange von denjenigen Vermittlungsrechnern SU1 bis SUm, von denen für die momentan überlastete Leitungswarteschlange bestimmte interne Nachrichtenblöcke zu übertragen sind, eine Fenstergröße W = 1 festgelegt und, falls erforderlich, temporär eine Rückstell-Warteschlange für die in Frage kommende Übertragungsleitung eingerichtet wird.

Im übrigen sei noch darauf hingewiesen, daß die in die einzelnen Leitungswarteschlangen LW1 bis LWx einer Leitungsanschlußeinrichtung einzufügenden internen Nachrichtenblöcke zuvor auch eine in der jeweiligen Leitungsanschlußeinrichtung eingerichtete Empfangswarteschlange EW durchlaufen können. Die Aufnahme von internen Nachrichtenblöcken in eine solche Empfangswarteschlange kann dann in der zuvor anhand der Figur 3 erläuterten Weise erfolgen, d. h. bei Erreichen eines festgelegten Füllgrades einer solchen Empfangswarteschlange wird von der jeweiligen Leitungsanschlußeinrichtung her eine negative Ringquittung SOV abgegeben, die in dem in Frage kommenden Vermittlungsrechner die Einrichtung einer individuellen Rückstell-Warteschlange für die jeweilige Leitungsanschlußeinrichtung bewirkt. Die anhand der Figur 4 erläuterte leitungsindividuelle Flußsteuerung sollte jedoch vor einer solchen leitungsanschlußeinrichtungs-individuellen Flußsteuerung ansprechen.

Abschließend sei noch darauf hingewiesen, daß zwar vorstehend die Flußsteuerung bei der Übertragung von Nachrichtenblöcken im Zuge bestehender Verbindungen am Beispiel einer als Ringleitungssystem ausgebildeten Fernmeldevermittlungsanlage erläutert worden ist. Die erfindungsgemäße Flußsteuerung ist jedoch allgemein in Fernmeldevermittlungsanlagen anwendbar, in welchen jeweils Leitungsanschlußeinrichtungen über wenigstens ein internes Leitungssystem mit einer Mehrzahl von Vermittlungsrechnern verbunden sind.

**Patentansprüche**

1. Verfahren zum Übertragen von Nachrichtenblöcken zwischen bei bestehenden Verbindungen einander zugeordneten Übertragungsleitungen (L11,..., Lnx) einer Fernmeldevermittlungsanlage (DVA), insbesondere einer Datenvermittlungsanlage, in welcher mit den Übertragungsleitungen verbundene Leitungsanschlußeinrichtungen (TU1, ..., TUn) über wenigstens ein internes Leitungssystem (BUS) an eine Mehrzahl von Vermittlungsrechnern (SU1, ..., SUm) angeschlossen sind und dabei in die Übertragung von internen Nachrichtenblöcken, welche den im Zuge einer bestehenden Verbindung auf den Übertragungsleitungen auftretenden Nachrichtenblöcken entsprechen, einer der Vermittlungsrechner sowie wenigstens eine der Leitungsanschlußeinrichtungen einbezogen sind,
**dadurch gekennzeichnet,**
daß von den Nachrichtenblöcke aufnehmenden Leitungsanschlußeinrichtungen (TU1, ..., TUn) her jeweils interne Nachrichtenblöcke zunächst fortlaufend, d. h. mit offener Fenstergröße $W = \infty$, zu einem für die jeweilige Verbindung in Frage kommenden Vermittlungsrechner (z. B. SU2) hin übertragen und dort in eine Übertragungswarteschlange (UEW) eingefügt werden, daß bei Erreichen eines festgelegten Füllgrades einer solchen Übertragungswarteschlange die Übertragung von internen Nachrichtenblöcken zu dem jeweiligen Vermittlungsrechner hin für eine festgelegte Zeitspanne unterbrochen wird und die dadurch zunächst nicht übertragbaren internen Nachrichtenblöcke in eine auf die Unterbrechung hin für den jeweiligen Vermittlungsrechner individuell eingerichtete Rückstell-Warteschlange (RW) eingefügt werden,
daß nach Ablauf der festgelegten Zeitspanne die Übertragung von internen Nachrichtenblöcken zu dem jeweiligen Vermittlungsrechner hin zunächst unter Berücksichtigung der in die zuvor eingerichtete Rückstell-Warteschlange eingefügten internen Nachrichtenblöcke wieder aufgenommen wird,
daß von den Vermittlungsrechnern her (SU1, ..., SUm) jeweils die zuvor in die zugehörige Übertragungswarteschlange (UEW) eingefügten internen Nachrichtenblöcke zunächst mit einer offenen Fenstergröße ($W = \infty$) zu der für die jeweilige Verbindung in Frage kommenden, Nachrichtenblöcke weiterleitenden Leitungsanschlußeinrichtung (z. B. TU2) hin übertragen und dort in eine der für die jeweilige Verbindung in Frage kommenden Übertragungsleitung individuell zugeordnete Leitungswarteschlange (LW1 bis LWx) eingefügt werden,
daß bei Überschreiten eines festgelegten ersten Füllgrades einer solchen Leitungswarteschlange zumindest bis zu dessen Unterschreiten in diese Leitungswarteschlange einzufügende interne Nachrichtenblöcke lediglich noch mit einer Fenstergröße $W = 1$ zu der jeweiligen Leitungsanschlußeinrichtung hin übertragen werden,
daß bei Erreichen eines festgelegten, oberhalb des ersten Füllgrades liegenden zweiten Füllgrades einer solchen Leitungswarteschlange dagegen die Übertragung von in diese einzufügenden internen Nachrichtenblöcken von dem jeweiligen Vermittlungsrechner her unterbrochen wird und die dadurch zunächst nicht übertragbaren internen Nachrichtenblöcke in eine auf die Unterbrechung hin für die jeweilige Übertragungsleitung individuell eingerichtete Rückstell-Warteschlange (RW) eingefügt werden
und daß erst nach Ablauf einer festgelegten Zeitspanne die Übertragung von in die betreffende Leitungswarteschlange einzufügenden internen Nachrichtenblöcken von dem jeweiligen Vermittlungsrechner her zunächst unter Berücksichtigung der in die zuvor eingerichtete Rückstell-Warteschlange eingefügten internen Nachrichtenblöcke wieder aufgenommen wird.

2.  Verfahren nach Anspruch 1,
    **dadurch gekennzeichnet,**
    daß als internes Leitungssystem (BUS) ein Ringleitungssystem benutzt wird, bei welchem jeder umlaufende interne Nachrichtenblock von einem als Empfänger in Frage kommenden Vermittlungsrechner (SU1,..., SUm) bzw. von einer als Empfänger in Frage kommenden Leitungsanschlußeinrichtung (TU1,..., TUm) übernommen und an dessen Stelle eine Ringquittung zu derjenigen Leitungsanschlußeinrichtung bzw. zu demjenigen Vermittlungsrechner hin weitergeleitet wird, von der bzw. von dem her zuvor der gerade aufgenommene interne Nachrichtenblock abgegeben worden ist, daß bei Vorliegen des festgelegten Füllgrades der einem Vermittlungsrechner zugehörigen Übertragungs-Warteschlange (UEW) von dem jeweiligen Vermittlungsrechner ein von diesen aufzunehmender interner Nachrichtenblock durch eine Ringquittung festgelegter Codierung zurückgewiesen wird,
    daß auf die Aufnahme einer solchen Ringquittung hin von der in Frage kommenden Leitungsanschlußeinrichtung einerseits die Übertragung von internen Nachrichtenblöcken zu dem jeweiligen Vermittlungsrechner hin unterbrochen wird und andererseits der zuvor zurückgewiesene interne Nachrichtenblock sowie diesem gegebenenfalls nachfolgende, von demselben Vermittlungsrechner aufzunehmende interne Nachrichtenblöcke in die für diesen Vermittlungsrechner eingerichtete Rückstell-Warteschlange (RW) eingefügt werden,
    daß von den Leitungsanschlußeinrichtungen (TU1 bis TUn) her dagegen auf die Übernahme eines internen Nachrichtenblockes hin der momentane Zustand der in Frage kommenden Leitungswarteschlange (LW1 bis LWx) und damit gegebenenfalls die Zurückweisung des gerade übernommenen internen Nachrichtenblokkes dem jeweiligen Vermittlungsrechner durch einen gesondert über das Ringleitungssystem übertragenen Signalisierungsblock angezeigt wird und daß auf den Empfang eines solchen Signalisierungsblockes hin von dem jeweiligen Vermittlungsrechner je nach der in dem betreffenden Signalisierungsblock enthaltenen Information die Übertragung von in die in Frage kommende Leitungswarteschlange einzufügenden internen Nachrichtenblöcken entweder mit offener Fenstergröße bzw. mit einer Fenstergröße $W = 1$ fortgesetzt oder unterbrochen wird und bei letzterem dabei der durch den gerade empfangenen Signalisierungsblock zurückgewiesene interne Nachrichtenblock gegebenenfalls zusammen mit diesem nachfolgenden, in dieselbe Leitungswarteschlange einzufügenden internen Nachrichtenblöcken in die auf die Unterbrechung hin eingerichtete Rückstell-Warteschlange (RW) eingefügt wird.

3.  Verfahren zum Übertragen von Nachrichtenblöcken zwischen bei bestehenden Verbindungen einander zugeordneten Übertragungsleitungen (L11, ..., Lnx) einer Fernmeldevermittlungsanlage (DVA), insbesondere einer Datenvermittlungsanlage, in welcher mit den Übertragungsleitungen verbundene Leitungsanschlußeinrichtungen (TU1,..., TUn) über wenigstens ein internes Leitungssystem (BUS) an eine Mehrzahl von Vermittlungsrechnern (SU1, ..., SUm) angeschlossen sind und dabei in die Übertragung von internen Nachrichtenblöcken, welche den im Zuge einer bestehenden Verbindung auf den Übertragungsleitungen auftretenden Nachrichtenblöcken entsprechen, einer der Vermittlungsrechner sowie wenigstens eine der Leitungsanschlußeinrichtungen einbezogen sind,
    **dadurch gekennzeichnet,**
    daß von den Nachrichtenblöcke aufnehmenden Leitungsanschlußeinrichtungen (TU1,..., TUn) her jeweils interne Nachrichtenblöcke zunächst fortlaufend, d. h. mit offener Fenstergröße $W = \infty$, zu einem für die jeweilige Verbindung in Frage kommenden Vermittlungsrechner (z . B. SU2) übertragen und dort in eine Übertragungswarteschlange (UEW) eingefügt werden,
    daß bei Erreichen eines festgelegten Füllgrades einer solchen Übertragungswarteschlange die Übertragung von internen Nachrichtenblökken zu dem jeweiligen Vermittlungsrechner hin für eine festgelegte Zeitspanne unterbrochen wird und die dadurch zunächst nicht übertragbaren internen Nachrichtenblöcke in eine auf die Unterbrechung hin für den jeweiligen Vermittlungsrechner individuell eingerichtete Rückstell-Warteschlange (RW) eingefügt werden,
    daß von den Vermittlungsrechnern (SU1, ..., SUm) her jeweils interne Nachrichtenblöcke zunächst fortlaufend, d. h. mit offener Fenstergröße $W = \infty$, zu einer für die jeweilige Verbindung in Frage kommenden Leitungsanschlußeinrichtung (zu. B. TU2) hin übertragen und dort in eine der zuvor genannten Übertragungswarteschlange entsprechende Empfangswarteschlange (EW) eingefügt werden,
    daß bei Erreichen eines festgelegten Füllgrades einer solchen Empfangswarteschlange die Übertragung von internen Nachrichtenblöcken zu der jeweiligen Leitungsanschlußeinrichtung hin für die genannten festgelegte Zeitspanne unterbrochen wird und die dadurch zunächst nicht übertragbaren internen Nachrichtenblökke in eine auf die Unterbrechung hin für die jeweilige Leitungsanschlußeinrichtung individuell eingerichtete Rückstell-Warteschlange (RW) eingefügt werden,

und daß nach Ablauf der festgelegten Zeitspanne die Übertragung von internen Nachrichtenblöcken zu dem jeweiligen Vermittlungsrechner oder zu der jeweiligen Leitungsanschlußeinrichtung hin zunächst unter Berücksichtigung der in die jeweilige zuvor eingerichtete Rückstell-Warteschlange eingefügten internen Nachrichtenblöcke wieder aufgenommen wird.

4. Verfahren nach Anspruch 3,
**dadurch gekennzeichnet,**

daß als internes Leitungssystem (BUS) ein Ringleitungssystem benutzt wird, bei welchem jeder umlaufende interne Nachrichtenblock von einem als Empfänger in Frage kommenden Vermittlungsrechner (SU1, ..., SUm) bzw. von einer als Empfänger in Frage kommenden Leitungsanschlußeinrichtung (TU1, ..., TUm) übernommen und an dessen Stelle eine Ringquittung zu derjenigen Leitungsanschlußeinrichtung bzw. zu demjenigen Vermittlungsrechner hin weitergeleitet wird, von der bzw. von dem her zuvor der gerade aufgenommene interne Nachrichtenblock abgegeben worden ist, daß bei Vorliegen des festgelegten Füllgrades der einem Vermittlungsrechner zugehörigen Übertragungswarteschlange (UEW) von dem jeweiligen Vermittlungsrechner ein von diesem aufzunehmender interner Nachrichtenblock durch eine Ringquittung festgelegter Codierung zurückgewiesen wird,

daß auf die Aufnahme einer solchen Ringquittung hin von der in Frage kommenden Leitungsanschlußeinrichtung einerseits die Übertragung von internen Nachrichtenblöcken zu dem jeweiligen Vermittlungsrechner hin unterbrochen wird und andererseits der zuvor zurückgewiesene interne Nachrichtenblock sowie diesem ggf. nachfolgende, von demselben Vermittlungsrechner aufzunehmende interne Nachrichtenblöcke in die für diesen Vermittlungsrechner eingerichtete Rückstell-Warteschlange (RW) eingefügt werden, daß bei Vorliegen des festgelegten Füllgrades der einer Leitungsanschlußeinrichtung zugehörigen Empfangswarteschlange (EW) von der jeweiligen Leitungsanschlußeinrichtung ein von dieser aufzunehmender interner Nachrichtenblock durch eine der zuvor erwähnten Ringquittung festgelegter Codierung entsprechende Ringquittung zurückgewiesen wird

und daß auf die Aufnahme einer solchen Ringquittung hin von dem in Frage kommenden Vermittlungsrechner einerseits die Übertragung von Nachrichtenblöcken zu der jeweiligen Leitungsanschlußeinrichtung hin unterbrochen wird

und andererseits der zuvor zurückgewiesene interne Nachrichtenblock sowie diesem ggf. nachfolgende, von derselben Leitungsanschlußeinrichtung aufzunehmende interne Nachrichtenblöcke in die für diese Leitungsanschlußeinrichtung eingerichtete Rückstell-Warteschlange (RW) eingefügt werden.

EP 0 475 180 A1

# FIG 1

# FIG 2

9

# FIG 3

# FIG 4

**Europäisches Patentamt**

**EUROPÄISCHER RECHERCHENBERICHT**

Nummer der Anmeldung

**EP 91 11 4268**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | AEU ARCHIV FÜR ELEKTRONIK UND ÜBERTRAGUNGS-TECHNIK, Band 44, Nr. 2, März/April 1990, Seiten 153-159, Stuttgart, DE; B. DASCH: "Überlaststrategien in der Paketvermittlung am Beispiel des Systems EWSP" * Abschnitt 3 * | 1-4 | H 04 L 12/56 |
| A | EP-A-0 272 939 (OKI ELECTRIC INDUSTRY CO.) * Zusammenfassung; Spalte 3, Zeile 53 - Spalte 5, Zeile 45; Figuren 1-2 * | 1-4 | |
| A | EP-A-0 214 625 (AT & T) * Zusammenfassung; Seite 3, Zeile 1 - Seite 4, Zeile 1; Figuren 1,2 * | 1-4 | |
| A | PROCEEDINGS OF THE NINTH INTERNATIONAL TELE-TRAFFIC CONGRESS, Torremolinos, Oktober 1979, Seiten MORI 1-8; J. MATSUMOTO et al.: "Congestion control in packet switched networks by gradual restrictions of virtual calls" * Abschnitte 2,3 * | 1 | |

RECHERCHIERTE SACHGEBIETE (Int. Cl.5)

H 04 L

Der vorliegende Recherchenbericht wurde für alle Patentansprüche erstellt

| Recherchenort | Abschlußdatum der Recherche | Prüfer |
|---|---|---|
| Den Haag | 06 Dezember 91 | ALI A. |